# EUROPEAN PATENT SPECIFICATION

(11) **EP 3 593 571 B1**
(45) Date of publication and mention of the grant of the patent: **21.06.2023**
(21) Application number: 17717648.4
(22) Date of filing: 07.04.2017
(51) Int. Cl.: H04W 56/00

(54) **TRANSMITTER AND RECEIVER COMMUNICATION DEVICE FOR A WIRELESS COMMUNICATION NETWORK**
SENDER- UND EMPFÄNGERKOMMUNIKATIONSVORRICHTUNG FÜR EIN DRAHTLOSKOMMUNIKATIONSNETZWERK
DISPOSITIF DE COMMUNICATION ÉMETTEUR ET RÉCEPTEUR POUR UN RÉSEAU DE COMMUNICATION SANS FIL

(43) Date of publication of application: 15.01.2020
(73) Proprietor: Huawei Technologies Duesseldorf GmbH, 40549 Düsseldorf (DE)
(72) Inventor: MANOLAKIS, Konstantinos, 80992 Munich (DE); XU, Wen, 80992 Munich (DE)
(74) Representative: Körber, Martin Hans
(86) International application number: PCT/EP2017/058351
(87) International publication number: WO 2018/184688

(56) References cited:
- WO-A1-2016/024825
- WO-A2-2016/032202
- US-A1- 2016 044 618

## Description

### TECHNICAL FIELD

Generally, the present invention relates to the field of wireless communications. More specifically, the present invention relates to a transmitter communication device and a receiver communication device for a wireless communication network, wherein the transmitter communication device is configured to serve as a synchronization reference for the receiver communication device.

### BACKGROUND

Direct device-to-device (D2D) communication is envisioned as a key component for future 5G networks. For safety and emergency applications, as often met in vehicle-to-anything (V2X) communications, ultra-reliable low-latency communication (URLLC) must be provided to mobile users. Therefore, fast and reliable time synchronization, user identification and link establishment are required especially in the sidelink, including any type of multi- or single-link D2D/V2V (vehicle-to-vehicle) communication (unicast, broadcast etc.). In the LTE sidelink, which is considered as the oncoming technology to serve D2D/V2V cellular-based communication, receiver-side synchronization is performed through the detection of a set of predefined synchronization sequences. Usually, these predefined synchronization sequences also provide the user ID of the transmitter, which serves as a synchronization reference to the receiver.

WO 2016/024825 A1 is a piece of prior art which discloses synchronisation algorithms in wireless a D2D wireless communication system.

A typical scenario of a mobile (e.g. vehicular) network in a cellular environment includes in- and out-of cellular coverage user equipments (UEs), some of which may be equipped with a Global Navigation Satellite System (GNSS) receiver. Coexistence of so-called in-band sidelink and cellular transmissions within a frequency band requires time alignment of all transmitted signals to avoid interference enhancement between links. Thus, time synchronization between the network nodes, including enhanced Node Bs (eNBs), relays/road side units (RSUs), sidelink-capable UEs and other cellular UEs is required. Similar synchronization requirements apply among multiple D2D radio links, even if the sidelink occupies a dedicated band (out-of-band D2D), other than the one used for cellular uplink/downlink transmission.

Fast and reliable receiver-side synchronization and link establishment is needed in the sidelink. Similar to the downlink, UEs need to perform time synchronization and estimate - through reception of sidelink synchronization signals - the so-called Beginning of Frame (BOF) and Beginning of Symbol (BOS) in order to correctly process the received signal, e.g. remove the Cyclic Prefix (CP) in an Orthogonal Frequency Division Multiplexing (OFDM) system. Typically, UEs perform simultaneously coarse frequency synchronization as well as estimate and compensate the Carrier Frequency Offset (CFO) between the transmitter and receiver oscillators.

Furthermore, sidelink UEs share their time reference through sidelink synchronization signals. By receiving and detecting these signals, even out-of-coverage UEs are able to synchronize and align their transmissions in time with respect to other -already synchronized- or in-coverage users. Of course, in order to properly evaluate, prioritize and potentially combine the time references of all received sidelink signals, each receiving UE needs to know the type of the time reference the transmitting users follow, e.g. a reference instructed by their base station, GNSS, other in- or out-of coverage UEs etc. By missing this information, UEs may be following a suboptimal time reference, or observe different references and may be unable to properly select the most relevant one on the basis of, for instance, a hierarchical synchronization/prioritization scheme.

Thus, there is a need for improved devices and methods in a wireless communication network allowing for improved synchronization, in particular a hierarchical synchronization using more than one type of synchronization sources possibly following different time references.

### SUMMARY

It is an object of the invention to provide improved devices and methods in a wireless communication network allowing for improved synchronization, in particular a hierarchical synchronization using more than one type of synchronization sources possibly following different time references.

The foregoing and other objects are achieved by the subject matter of the independent claims. Further implementation forms are apparent from the dependent claims, the description and the figures.

According to a first aspect the invention relates to a transmitter communication device configured for communication with a receiver communication device in a wireless communication network, wherein the transmitter communication device comprises a processor configured to provide basic synchronization information by generating a communication frame comprising at least a first signal and a second signal for synchronizing the receiver communication device. The processor is further configured to provide additional synchronization information on the basis of the first and the second signal by arranging at least the first signal and the second signal in a pre-defined configuration in the communication frame, namely by the combination of positions of the first and second signal within the communication frame; and by selecting the first and the second signal from a set of pre-defined synchronization signals that differ in a generating code (in particular generating sequence).

Thus, the transmitter communication device according to the first aspect advantageously provides additional synchronization information on the basis of at least one of two additional "information dimensions", namely by the combination of positions of the first and second signal within the communication frame and by the combination of generating codes used for the first and second signal. The communication frame can comprise the "usual" information dimensions of time, frequency and space (beamforming using multiple antennas). To this end, the transmitter communication device can be configured to multiplex the first and second signal in the communication frame in time, frequency and/or space.

In different implementation forms the first signal and/or the second signal can be, for instance, reference signals, pilot signals and/or synchronization signals. In an implementation form the communication frame can comprise more than two signals, for instance, three signals, which are chosen from a set of pre-defined synchronization signals comprising a first and a second synchronization signal. In an implementation form the set of pre-defined synchronization signals comprises two or more than two pre-defined synchronization signals. The pre-defined synchronization signals can be based on LTE primary synchronization signals. In an implementation form the set of pre-defined synchronization signals can depend on the receiver communication device, i.e. the transmitter communication device can use a different set of pre-defined synchronization signals for different receiver communication devices.

The transmitter communication device and/or the receiver communication device can be, for instance, a user equipment or a base station of the wireless communication network. The wireless communication network can be, for instance, a cellular communication network, an assisted network or an ad-hoc network. The transmitter communication device and the receiver communication device can be configured to communicate, for instance, in an uplink, downlink and/or sidelink direction. To this end, the transmitter communication device can comprise a communication interface configured to transmit the communication frame to the receiver communication device.

Thus, embodiments of the invention allow generating advanced synchronization sequences, which are capable of carrying additional synchronization information providing more than a user/transmitter identifier (user-ID), as in the case of sequences used for conventional LTE synchronization signals. Such additional synchronization information may include the type of the synchronization source reference of the transmitter communication device (such as base station/cellular network, GNSS etc.), the number of hops over which the transmitter communication device has received its synchronization reference or other information. This additional synchronization information can be used beneficially by the receiver communication device for prioritizing and weighting synchronization signals received by the receiver communication device from other devices through the sidelink and/or for applying hierarchical synchronization. Moreover, embodiments of the invention provide a scalable, backward-compatible extension of LTE primary synchronization signal, which, while still carrying the user-ID, further enables identification of the synchronization source and application of hierarchical synchronization at the receiver communication device.

In a further implementation form of the first aspect, both the first signal and the second signal are configured to individually provide the receiver communication device at least with partial information for determining an identifier of the transmitter communication device. This provides for the technical advantage of being less prone to transmission errors.

In a further implementation form of the first aspect, the first signal and the second signal are orthogonal, in one or more of time, frequency, space or code. This provides for the technical advantage that the first signal and the second signal can be more easily distinguished by the receiver communication device, while using the same communication resource.

In a further implementation form of the first aspect, the second signal is the complex conjugate of the first signal. This provides for the technical advantage that the first signal and the second signal can be more easily distinguished by the receiver communication device with a significantly lower computational complexity.

In a further implementation form of the first aspect, the first and signal are based on Zadoff-Chu sequences with the same length L and different root indices u1 and u2.

In a further implementation form of the first aspect, the first root index u1 and the second root index u2 are prime numbers to the length L with u2 = L-u1. This provides for the technical advantage that the first signal and the second signal can be more easily distinguished by the receiver communication device, because the second signal is the complex conjugate of the first signal.

In a further implementation form of the first aspect, the length L of the first Zadoff-Chu sequence is equal to 63, the first root index u1 of the first Zadoff-Chu sequence is equal to 26 and the second root index u2 of the second Zadoff-Chu sequence is equal to 37.

In a further implementation form of the first aspect, the additional synchronization information comprises information for hierarchically synchronizing the receiver communication device, in particular information about the synchronization source and/or a status of the synchronization source.

According to a second aspect the invention relates to a corresponding method of operating a transmitter communication device configured for communication with a receiver communication device in a wireless communication network, wherein the method comprises the following steps: providing basic synchronization information by generating a communication frame comprising at least a first signal and a second signal for synchronizing the receiver communication device; and providing additional synchronization information on the basis of the first and the second signal by: arranging at least the first signal and the second signal in a pre-defined configuration in the communication frame, namely by the combination of positions of the first and second signal within the communication frame; and selecting the first signal and the second signal from a set of pre-defined synchronization signals that differ in a generating code.

The method according to the second aspect of the invention can be performed by the transmitter communication device according to the first aspect of the invention. Further features of the method according to the second aspect of the invention result directly from the functionality of the transmitter communication device according to the first aspect of the invention and its different implementation forms.

According to a third aspect the invention relates to a receiver communication device configured for communication with a transmitter communication device in a wireless communication network, the receiver communication device comprising: a communication interface configured to receive a communication frame from the transmitter communication device, wherein the communication frame comprises at least a first signal and a second signal providing basic synchronization information for synchronizing the receiver communication device; and a processor configured to obtain additional synchronization information from the communication frame, wherein the additional synchronization information is defined by: an arrangement of the first signal and the second signal in a pre-defined configuration in the communication frame, namely by the combination of positions of the first and second signal within the communication frame; and a selection of the first and the second signal from a set of pre-defined synchronization signals that differ in a generating code.

In a further implementation form of the third aspect, the processor is configured to obtain the additional synchronization information on the basis of a cross-correlation.

In a further implementation form of the third aspect, the processor is configured to hierarchically synchronize the receiver communication device on the basis of the additional synchronization information obtained from the communication frame, in particular information about the synchronization source and/or a status of the synchronization source.

According to a fourth aspect the invention relates to a corresponding method of operating a receiver communication device configured for communication with a transmitter communication device in a wireless communication network, the method comprising the following steps: receiving a communication frame from the transmitter communication device, wherein the communication frame comprises at least a first signal and a second signal providing basic synchronization information for synchronizing the receiver communication device; and obtaining additional synchronization information from the communication frame wherein the additional synchronization information is defined by an arrangement of the first signal and the second signal in a pre-defined configuration in the communication frame, namely by the combination of positions of the first and second signal within the communication frame; and a selection of the first and the second signal from a set of pre-defined synchronization signals that differ in a generating code.

The method according to the fourth aspect of the invention can be performed by the receiver communication device according to the third aspect of the invention. Further features of the method according to the fourth aspect of the invention result directly from the functionality of the receiver communication device according to the third aspect of the invention and its different implementation forms.

According to a fifth aspect the invention relates to a computer program product, comprising computer executable instructions stored on a non-transitory computer-readable medium, wherein when the instructions are executed on a computer or a processor, causes the processor to perform the method according to the second aspect or the method according to the fourth aspect.

The invention can be implemented in hardware and/or software.

### BRIEF DESCRIPTION OF DRAWINGS

Further embodiments of the invention will be described with respect to the following figures, wherein:
Fig. 1 shows a schematic diagram illustrating a wireless communication network comprising a transmitter communication device according to an embodiment and a receiver communication device according to an embodiment;
Figs. 2a, 2b and 2c show a respective schematic diagram illustrating several communication frames communicated between a transmitter communication device according to an embodiment and a receiver communication device according to an embodiment;
Fig. 3 shows a schematic diagram illustrating an exemplary hierarchical synchronization scheme implemented in a receiver communication device according to an embodiment;
Fig. 4 shows a schematic diagram illustrating processing steps implemented in a receiver communication device according to an embodiment;
Fig. 5 shows a diagram illustrating the respective results of a cross-correlation performed by a receiver communication device according to an embodiment;
Fig. 6 shows a table illustrating different types of synchronization information provided by a transmitter communication device according to an embodiment;
Fig. 7 shows a flow diagram illustrating processing steps implemented in a receiver communication device according to an embodiment;
Fig. 8 shows a flow diagram illustrating processing steps implemented in a receiver communication device according to an embodiment;
Fig. 9 shows a schematic diagram illustrating processing steps implemented in a receiver communication device according to an embodiment;
Fig. 10 shows a flow diagram illustrating a method of operating a transmitter communication device according to an embodiment; and
Fig. 11 shows a flow diagram illustrating a method of operating a receiver communication device according to an embodiment.

In the various figures, identical reference signs will be used for identical or at least functionally equivalent features.

### DESCRIPTION OF EMBODIMENTS

In the following description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

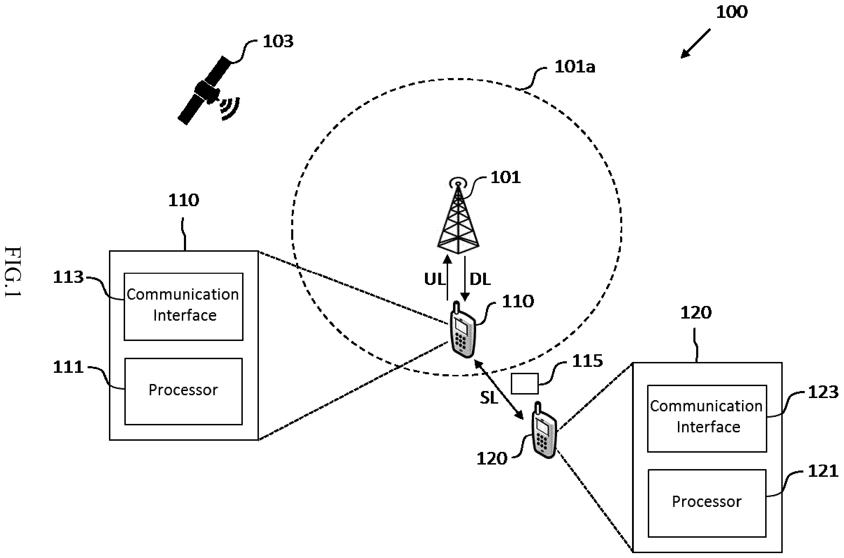

Figure 1 shows a schematic diagram illustrating a wireless communication network 100 comprising a transmitter communication device 110 according to an embodiment and a receiver communication device 120 according to an embodiment. As indicated in figure 1, the transmitter communication device 110 and the receiver communication device 120 can be implemented in the form of user equipments (UEs), in particular mobile phones.

As indicated in figure 1, the wireless communication network 100 can further comprise a plurality of base stations 101 (only one base station 101 shown in figure for the sake of clarity), wherein each base station 101 defines a coverage area 101a. In the exemplary scenario shown in figure 1, the transmitter communication device 110 is located within the coverage area 101a of the base station 101 and, thus, can communicate with the base station 101 in an uplink (UL) and a downlink (DL) direction. Moreover, by way of example, the receiver communication device 120 is located outside of the coverage area 101a of the base station 101 and, thus, cannot communicate with the base station 101, but can communicate with the transmitter communication device 110 in a sidelink (SL) direction. The wireless communication network 100 can further comprise one or more satellites 103 of a global navigation satellite system (GNSS) configured to provide synchronization signals to the transmitter communication device 110 and/or the receiver communication device 120.

In the embodiment shown in figure 1, the transmitter communication device 110 comprises a processor 111 and a communication interface 113 and the receiver communication device 120 comprises a processor 121 and a communication interface 123.

As will be described in more detail further below, the processor 111 of the transmitter communication device 110 is configured to provide basic synchronization information by generating a communication frame 115 comprising at least a first signal and a second signal for synchronizing the receiver communication device 120. The processor 111 of the transmitter communication device 110 is further configured to provide additional synchronization information on the basis of the first and the second signal (i) by arranging at least the first signal and the second signal in a pre-defined configuration in the communication frame 115, namely by the combination of positions of the first and second signal within the communication frame, and (ii) by selecting the first and the second signal from a set of pre-defined synchronization signals that differ in a generating code. The communication interface 113 of the transmitter communication device 113 can be configured to transmit the communication frame 115 to the receiver communication device 120.

The communication interface 123 of the receiver communication device 120 is configured to receive the communication frame 115 from the transmitter communication device 110, wherein the communication frame comprises the first signal and the second signal providing basic synchronization information for synchronizing the receiver communication device 120. As will be described in more detail further below, the processor 121 of the receiver communication device 120 is configured to obtain additional synchronization information from the communication frame 115, wherein the additional synchronization information is defined (i) by an arrangement of the first signal and the second signal in a pre-defined configuration in the communication frame 115, namely by the combination of positions of the first and second signal within the communication frame, and (ii) by a selection of the first and the second signal from a set of pre-defined synchronization signals that differ in a generating code.

In an embodiment, the first signal and/or the second signal can be, for instance, reference signals, pilot signals and/or synchronization signals. In an embodiment, the communication frame 115 can comprise more than two signals. In an embodiment, the set of pre-defined synchronization signals comprises two or more than two pre-defined synchronization signals. In an embodiment, the set of pre-defined synchronization signals can depend on the receiver communication device 120, i.e. the transmitter communication device 110 can use a different set of pre-defined synchronization signals for different receiver communication devices 120.

In an embodiment the pre-defined synchronization signals can be based on LTE primary synchronization signals. Current cellular 3GPP LTE specifications provide a set of primary and secondary synchronization signals, namely PSSS/SSSS for the sidelink (for the general (i.e. non sidelink) case the primary and secondary synchronization signal are also referred to as "PSS" and "SSS" in the following). The user-ID contained in two integer parts is included in these sequences, where the first segment is in the PSSS and the second segment is in the SSSS. The PSSS consists of two identical parts, which are mapped on two consecutive OFDM symbols.

In an embodiment, the pre-defined synchronization signals are based on 63-length Zadoff-Chu (ZC) sequences. For a PSSS the particular root index identifies the sequence and the first segment of the user-ID, which indicates whether the user ID lies within the range {0,.., 167} or the range {168,..,335}. In an embodiment, two predefined root indices, preferably 26 and/or 37, are used.

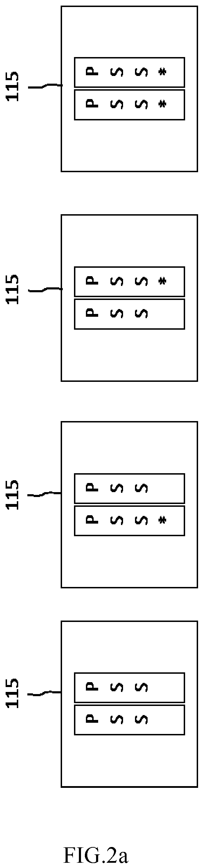

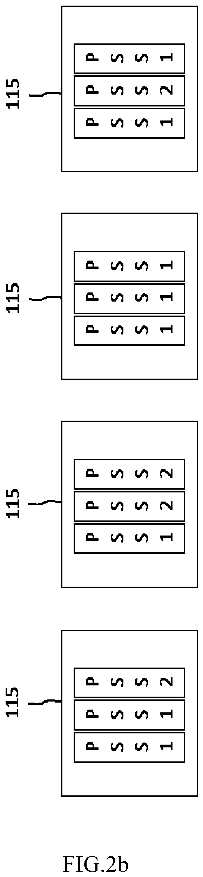

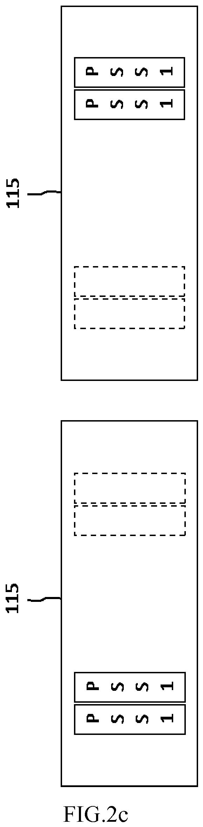

Figures 2a, 2b and 2c show exemplary communication frames 115 generated by the transmitter communication device 110 for encoding additional synchronization information therein.

Figure 2a shows four exemplary communication frames 115, where the processor 111 of the transmitter communication device 110 is configured to provide additional synchronization information on the basis of the first or the second signal by selecting the first and the second signal from a set of pre-defined synchronization signals that differ in a generating code (in particular generating sequence). In the example shown in figure 2a the set of pre-defined synchronization signals contains a primary synchronization signal (PSS), such as a conventional LTE PSS, and its complex conjugate (PSS*). As will be appreciated, the additional synchronization information provided by the respective communication frames 115 shown in figure 2a could be expressed as the bit sequences "00", "10", "01" and "11". By using a complex-valued PSS and its complex conjugate PSS* a cross-correlation-based detection performed by the receiver communication device 120 will be computationally more efficient. Moreover, the exemplary scheme illustrated in figure 2a comes with no additional overhead with the standard LTE synchronization scheme with two PSS in the LTE communication frame.

Figure 2b shows four exemplary (out of eight possible) communication frames 115, wherein, as in the case of the example shown in figure 2a, the processor 111 of the transmitter communication device 110 is configured to provide additional synchronization information on the basis of the first or the second signal by selecting the first and the second signal from a set of pre-defined synchronization signals that differ in a generating code (in particular generating sequence). In the example shown in figure 2b the set of pre-defined synchronization signals contains a first primary synchronization signal (PSS1) and a second primary synchronization signal (PSS2) and the communication frame 115 comprises in addition to the first signal and the second signal a third signal allowing to encode more additional synchronization information. As can be taken from figure 2b, in this example the communication frame 115 provides three slots, wherein each slot is to be filed by the processor 111 of the transmitter communication device 110 either with PSS1 or with PSS2. As will be appreciated, the additional synchronization information provided by the exemplary communication frames 115 shown in figure 2n could be expressed as the bit sequences "001", "011", "000" and "010", respectively.

Figure 2c shows two exemplary communication frames 115, where the processor 111 of the transmitter communication device 110 is configured to provide additional synchronization information on the basis of the first or the second signal by arranging at least the first signal and the second signal in a pre-defined configuration in the communication frame 115. In the example shown in figure 2c the first and the signal are the same primary synchronization signal (PSS1) and the processor 111 of the transmitter communication device 110 is configured to arrange each of the first signal and the second signal in one of four possible slots. Thus, in the communication frame 115 on the left of figure 2c the first signal and the second signal are arranged in a first pre-defined configuration and in the communication frame 115 on the right the first signal and the second signal are arranged in a second pre-defined configuration. As will be appreciated, for the receiver communication device 120 the first pre-defined configuration can mean different additional synchronization information the second pre-defined configuration.

As already described above, the pre-defined synchronization signals can be based on LTE primary synchronization signals. Thus, in an embodiment both the first signal and the second signal are configured to individually provide the receiver communication device 120 at least with partial information for determining an identifier (user-ID) of the transmitter communication device 110.

As already described above, in an embodiment the first signal is based on a first Zadoff-Chu sequence and the second signal is based on a second Zadoff-Chu sequence. In an embodiment, the first Zadoff-Chu sequence is defined by a length L and a first root index u1 and the second Zadoff-Chu sequence is defined by a length L and a second root index u2 with u2 = L-u1. In an embodiment, the length L of the first Zadoff-Chu sequence is equal to 63, the first root index u1 of the first Zadoff-Chu sequence is equal to 26 and the second root index u2 of the second Zadoff-Chu sequence is equal to 37.

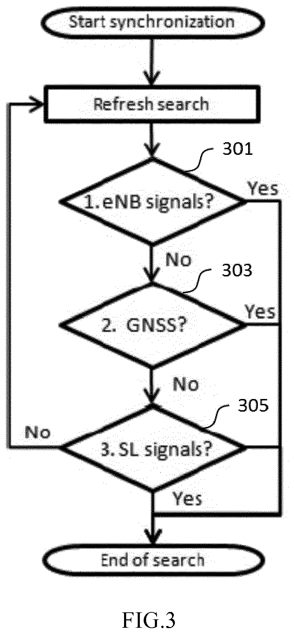

Figure 3 shows a schematic diagram illustrating a hierarchical synchronization scheme implemented in the receiver communication device 120 according to an embodiment. In case the receiver communication device 120 is within the coverage area 101a of the base station 101 (i.e. the serving eNB), the receiver communication device 120 can detect downlink synchronization signals from the base station 101 (step 301) and perform synchronization on the basis there. In the absence of cellular coverage, the receiver communication device 120 can try to detect synchronization signals from the GNSS 103 (step 303). If the GNSS reference is not available, the out-of-coverage receiver communication device 120 can synchronize through sidelink synchronization signals sent by other in- or out-of-coverage communication devices (step 305), such as the transmitter communication device 110. In order to better align with nearby communication devices, it can be advantageous to synchronize not only to a single source, but to combine signals from multiple sources. In order to apply a hierarchical selection/combination, as shown in Figure 3, additional synchronization information, such as information about the type of the synchronization source and the number of hops between the initial source and the transmitter communication device 110 are advantageously transmitted to the receiver communication device, as provided by embodiments of the invention.

An example of the additional synchronization information, which may be encoded by the transmitter communication device 110 in the communication frame 115 is provided in the following, wherein the transmitter communication device 110 is implemented in the form of a user equipment (UE) 110:
1. UE 110 follows base station (BS) 101 reference
   a. BS 101 uses reference type A (e.g. GNSS 103)
      i. UE 110 obtains reference directly from BS 101 (in-coverage)
      ii. UE 110 obtains reference from another (in-coverage) UE
   b. BS 101 uses reference type B (e.g. network-based synchronization)
      i. UE 110 obtains reference directly from BS 101 (in-coverage)
      ii. UE 110 obtains reference from another (in-coverage) UE
2. UE 110 follows GNSS 103 reference
   a. UE 110 has GNSS 103 reference of type A (e.g. GPS)
      i. UE 110 obtains reference directly from GNSS 103 (in-coverage)
      ii. UE 110 obtains reference form another UE with GNSS 103
   b. UE 110 has GNSS 103 reference of type B (e.g. Galileo)
      i. UE 110 obtains reference directly from GNSS 103 (in-coverage)
      ii. UE 110 obtains reference from another UE with GNSS 103

As will be appreciated, the above additional synchronization information can be encoded by the transmitter communication device 110, for instance, on the basis of one or more of the examples shown in figures 2a, 2b and 2c.

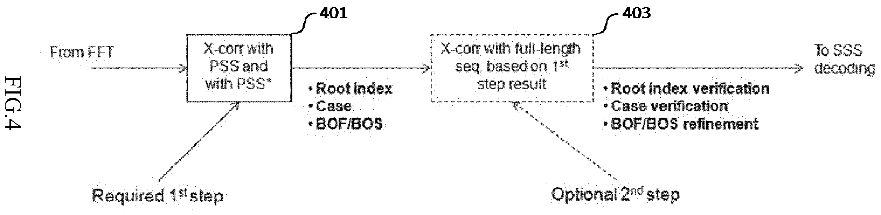

Figure 4 shows a schematic diagram illustrating processing steps implemented in the receiver communication device 120 according to an embodiment. More specifically, figure 4 illustrates the sequence detection at the receiver communication device 120. In a first stage 401, a cross-correlation (x-corr) is performed to identify which sequence (built by a combination of PSS or PSS*) is sent. The case is identified and the BOF/BOS is detected at the same time. In a second stage 403, a cross-correlation with the full detected sequence from the first stage can be performed to validate and refine the estimation.

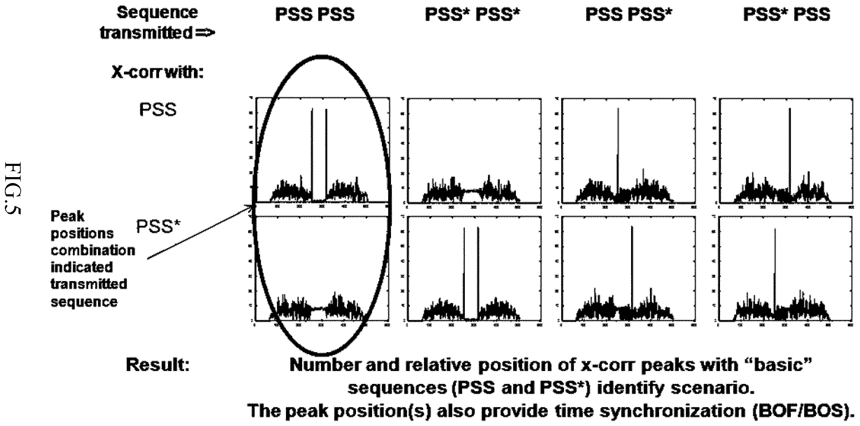

Figure 5 shows the result of the first and second stage correlations for different combinations of transmitted signal for the two-segment signal (n=2). The peak positions combination in the first stage 401 already indicates which sequences have been received, which identifies the case. At the same time, time synchronization can be performed. In the second stage 403, the correlation with the full sequence verifies the estimate and refines it. Possible imperfections and errors from the first stage 401 can be also detected here. In both first and second stages, if detection is successful, there is no uncertainty about the transmitted sequence; hence all the information can be obtained by the receiver communication device 120.

A further example of the additional synchronization information, which may be encoded by the transmitter communication device 110 in the communication frame 115 is provided in the following, wherein the transmitter communication device 110 is implemented in the form of a user equipment (UE) 110:
1. User-ID, its first part, i.e. whether it lies in {0, ..., 167} or {168, ..., 335}.
2. UE 110 uses the cellular network, i.e. base station 101 reference
   - Directly (in cellular coverage)
   - Over another UE in cellular coverage
3. UE 110 uses GNSS 103 reference
   - Directly (with own GNSS link)
   - Over another UE with a GNSS link

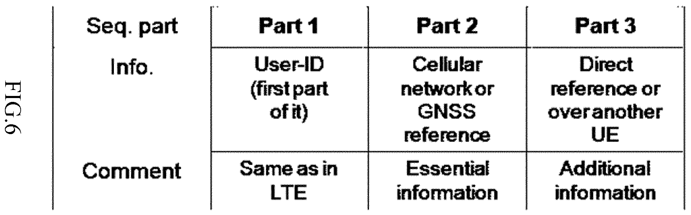

This results in the scheme shown in Figure 6. The benefit of the scheme is that it allows for one-by-one parameter detection and, as described in the following, backwards compatibility with legacy LTE signals and UEs.

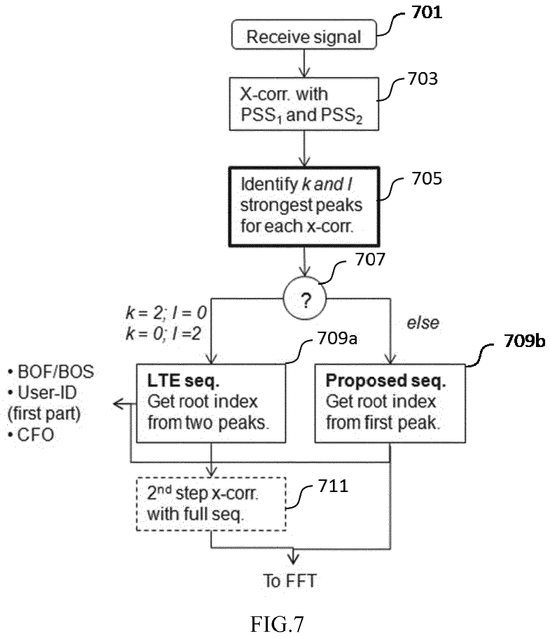

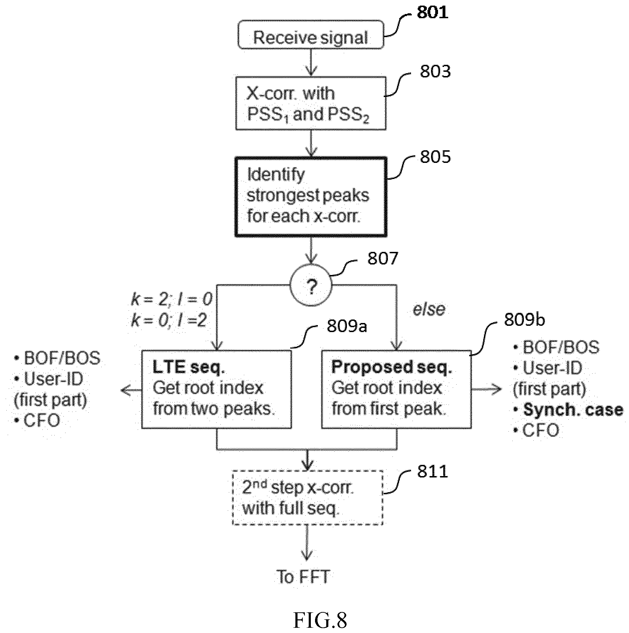

The search procedure followed by the receiver communication device 120 according to an embodiment and a LTE legacy UE to detect signals and obtain the above information is explained by the flow diagrams shown in figures 7 and 8, respectively. In both figures 7 and 8, the decision point 707/807 is important, where the receiver communication device 120 decides what type of synchronization sequences it has received (LTE or advanced) and acquires the corresponding information from these sequences. Steps 701 to 705 of figure 7 and steps 801 to 805 of figure 8 illustrate the correlation-based peak detection, whereas step 709/809 refers to the parameter extraction and the optional step 711/811 allows for a refinement of the preceding steps (peak refinement).

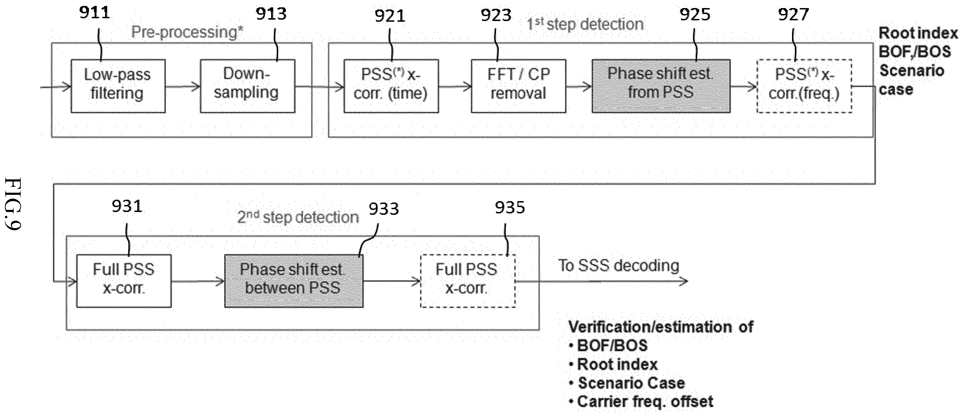

Figure 9 shows a schematic diagram illustrating processing steps implemented in the receiver communication device 120 according to an embodiment. More specifically, figure 9 illustrates an implementation of the two-stage detection at the receiver communication device 120. In addition to pre-processing steps 911, 913 and the basic cross-correlation based operations (steps 921, 923 and 927 and steps 931 and 935), which have been already described above, it is advantageous to perform the additional steps highlighted in grey, namely steps 925 and 933. In these steps, the phase shifts estimated due to time/frequency offsets can be compensated, before the operation is performed again (processing blocks with dashed lines, i.e. steps 927 and 935). This allows validating and refining the initial estimates and provides a less-distorted signal to the next steps of the signal processing chain.

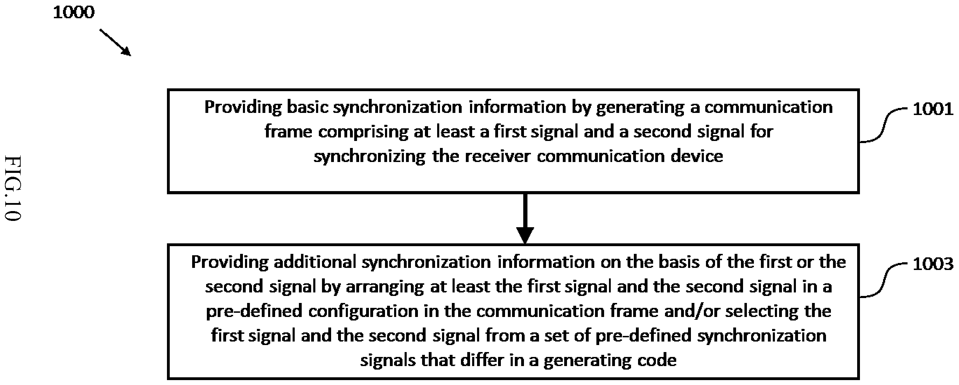

Figure 10 shows a flow diagram illustrating a method 1000 of operating the transmitter communication device 110 according to an embodiment. The method 1000 comprises the steps of providing 1001 basic synchronization information by generating a communication frame 115 comprising at least a first signal and a second signal for synchronizing the receiver communication device 120 and providing 1003 additional synchronization information on the basis of the first or the second signal by: arranging at least the first signal and the second signal in a pre-defined configuration in the communication frame 115, namely by the combination of positions of the first and second signal within the communication frame, and selecting the first signal and the second signal from a set of pre-defined synchronization signals that differ in a generating code.

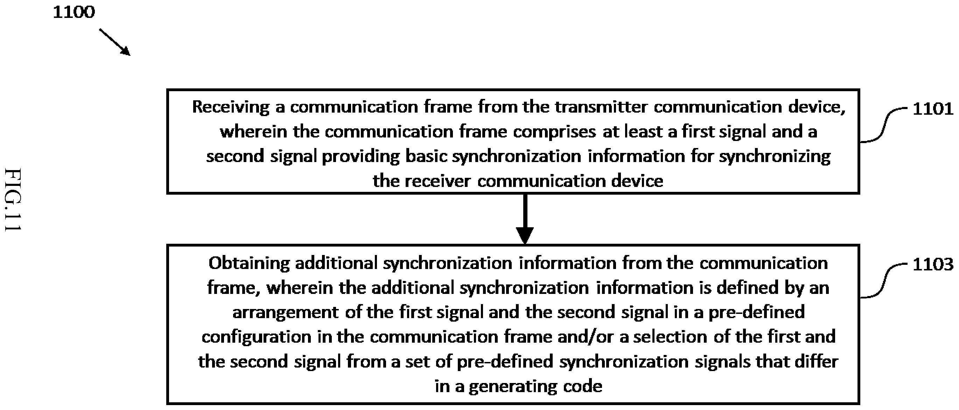

Figure 11 shows a flow diagram illustrating a method 1100 of operating the receiver communication device 120 according to an embodiment. The method comprises the steps of receiving 1101 a communication frame 115 from the transmitter communication device 110, wherein the communication frame 115 comprises at least a first signal and a second signal providing basic synchronization information for synchronizing the receiver communication device 120 and obtaining 1103 additional synchronization information from the communication frame 115, wherein the additional synchronization information is defined by an arrangement of the first signal and the second signal in a pre-defined configuration in the communication frame, namely by the combination of positions of the first and second signal within the communication frame, and a selection of the first and the second signal from a set of pre-defined synchronization signals that differ in a generating code.

Embodiments of the invention provide a novel scheme for generating hierarchically structured sequences, which can be used to distinguish between different cases, e.g. synchronization status of a transmitting UE. Sequences with n segments, where each segment is chosen from a set of two possible subsequences, can identify 2n different cases by checking whether that sequence has been received or not (binary decision: yes/no). Moreover, by defining one segment as the complex conjugate of the other one, computational complexity of correlation-based detection procedures can be significantly reduced. In order align with the LTE framework, the already involved Zadoff-Chu sequences can be used for constructing sidelink synchronization signals. By choosing root indices for first and second segment as described above, orthogonality between subsequences can be obtained. Finally, backward compatibility for legacy transmitting and receiving UEs is maintained, while more advanced UEs can take advantage of the proposed sequences and extract additional information.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims the invention may be practiced otherwise than as specifically described herein.

## Claims

1. A transmitter communication device (110) configured for
communication with a receiver communication device (120) in a wireless communication network (100), wherein the transmitter communication device (110) comprises:
a processor (111) configured to provide basic synchronization information by generating a communication frame (115) comprising at least a first signal and a second signal for synchronizing the receiver communication device (120)
and
**characterized in**
**that** the processor (111) is further configured to provide additional synchronization information on the basis of the first and the second signal by:
- arranging at least the first signal and the second signal in a pre-defined configuration in the communication frame (115),
namely by the combination of positions of the first and second signal within the communication frame; and
- selecting the first and the second signal from a set of pre-defined synchronization signals that differ in a generating code.

2. The transmitter communication device (110) of claim 1,
wherein both the first signal and the second signal are configured to individually provide the receiver communication device (120) at least with partial information for determining an identifier of the transmitter communication device (110).

3. The transmitter communication device (110) of claim 1 or 2,
wherein the first signal and the second signal are orthogonal in one or more of time, frequency, space or code.

4. The transmitter communication device (110) of any one of the preceding claims,
wherein the second signal is the complex conjugate of the first signal.

5. The transmitter communication device (110) of any one of the preceding claims,
wherein the first and second signal are based on Zadoff-Chu sequences with same length L and different root indices u1 and u2.

6. The transmitter communication device (110) of claim 5,
wherein the first root index u1 and the second root index u2 are prime numbers to the length L with u2 = L-u1.

7. The transmitter communication device (110) of claim 6,
wherein the length L is equal to 63, the first root index u1 is equal to 26 and the second root index u2 is equal to 37.

8. The transmitter communication device (110) of any one of the preceding claims,
wherein the additional synchronization information comprises information for hierarchically synchronizing the receiver communication device (120).

9. A method (1000) of operating a transmitter communication device (110) configured for communication with a receiver communication device (120) in a wireless communication network (100), wherein the method (1000) comprises:
providing basic synchronization information by generating a communication frame (115) comprising at least a first signal and a second signal for synchronizing the receiver communication device (120); and
**characterized in**
providing additional synchronization information on the basis of the first and the second signal by:
arranging at least the first signal and the second signal in a pre-defined configuration in the communication frame (115),
namely by the combination of positions of the first and second signal within the communication frame; and
selecting the first signal and the second signal from a set of pre-defined synchronization signals that differ in a generating code.

10. A receiver communication device (120) configured for
communication with a transmitter communication device (110) in a wireless communication network (100), the receiver communication device (120) comprising:
a communication interface (123) configured to receive a communication frame (115) from the transmitter communication device (110), wherein the communication frame (115) comprises at least a first signal and a second signal providing basic synchronization information for synchronizing the receiver communication device (120); and
**characterized in**
a processor (121) configured to obtain additional synchronization information from the communication frame (115), wherein the additional synchronization information is defined by:
- an arrangement of the first signal and the second signal in a pre-defined configuration in the communication frame (115),
namely by the combination of positions of the first and second signal within the communication frame; and
- a selection of the first and the second signal from a set of pre-defined synchronization signals that differ in a generating code.

11. The receiver communication device (120) of claim 10, wherein the processor (121) is configured to obtain the additional synchronization information on the basis of a cross-correlation.

12. The receiver communication device (120) of claim 10 or 11, wherein the processor (121) is configured to hierarchically synchronize the receiver communication device (120) on the basis of the additional synchronization information obtained from the communication frame (115).

13. A method (1100) of operating a receiver communication device (120) configured for communication with a transmitter communication device (110) in a wireless communication network (100), the method (1100) comprising:
receiving (1101) a communication frame (115) from the transmitter communication device (110), wherein the communication frame (115) comprises at least a first signal and a second signal providing basic synchronization information for synchronizing the receiver communication device (120); and
**characterized in**
obtaining (1103) additional synchronization information from the communication frame (115), wherein the additional synchronization information is defined by:
- an arrangement of the first signal and the second signal in a pre-defined configuration in the communication frame (115),
namely by the combination of positions of the first and second signal within the communication frame; and
- a selection of the first and the second signal from a set of pre-defined synchronization signals that differ in a generating code.

14. A computer program comprising instructions to cause the device of claim 1 to execute the steps of the method (1000) of claim 9.

15. A computer program comprising instructions to cause the device of claim 10 to execute the steps of the method (1100) of claim 13.

## Patentansprüche

1. Senderkommunikationsvorrichtung (110), die konfiguriert ist für
eine Kommunikation mit einer Empfängerkommunikationsvorrichtung (120) in einem drahtlosen Kommunikationsnetz (100), wobei die Senderkommunikationsvorrichtung (110) umfasst:
einen Prozessor (111), der konfiguriert ist, um grundlegende Synchronisationsinformationen durch Erzeugen eines Kommunikationsrahmens (115), umfassend mindestens ein erstes Signal und ein zweites Signal zum Synchronisieren der Empfängerkommunikationsvorrichtung (120), bereitzustellen
und
**gekennzeichnet dadurch,**
**dass** der Prozessor (111) ferner konfiguriert ist, um zusätzliche Synchronisationsinformationen auf der Basis des ersten und des zweiten Signals bereitzustellen durch:
- Anordnen mindestens des ersten Signals und des zweiten Signals in einer vordefinierten Konfiguration in dem Kommunikationsrahmen (115),
nämlich durch die Kombination von Positionen des ersten und des zweiten Signals innerhalb des Kommunikationsrahmens; und
- Auswählen des ersten und des zweiten Signals von einem Satz vordefinierter Synchronisationssignale, die sich in einem Erzeugungscode unterscheiden.

2. Senderkommunikationsvorrichtung (110) nach Anspruch 1,
wobei sowohl das erste Signal als auch das zweite Signal konfiguriert sind, um die Empfängerkommunikationsvorrichtung (120) mindestens mit Teilinformationen zum Bestimmen eines Bezeichners der Senderkommunikationsvorrichtung (110) individuell zu versehen.

3. Senderkommunikationsvorrichtung (110) nach Anspruch 1 oder 2,
wobei das erste Signal und das zweite Signal in einem oder mehreren von Zeit, Frequenz, Raum oder Code orthogonal sind.

4. Senderkommunikationsvorrichtung (110) nach einem der vorstehenden Ansprüche,
wobei das zweite Signal die konjugiert-komplexe Zahl des ersten Signals ist.

5. Senderkommunikationsvorrichtung (110) nach einem der vorstehenden Ansprüche,
wobei das erste und das zweite Signal auf Zadoff-Chu-Sequenzen mit gleicher Länge L und unterschiedlichen Wurzelindizes u1 und u2 basieren.

6. Senderkommunikationsvorrichtung (110) nach Anspruch 5,
wobei der erste Wurzelindex u1 und der zweite Wurzelindex u2 Primzahlen zu der Länge L mit u2 = L-u1 sind.

7. Senderkommunikationsvorrichtung (110) nach Anspruch 6,
wobei die Länge L gleich 63 ist, der erste Wurzelindex u1 gleich 26 ist und der zweite Wurzelindex u2 gleich 37 ist.

8. Senderkommunikationsvorrichtung (110) nach einem der vorstehenden Ansprüche, wobei die zusätzlichen Synchronisationsinformationen Informationen zum hierarchischen Synchronisieren der Empfängerkommunikationsvorrichtung (120) umfassen.

9. Verfahren (1000) zum Betreiben einer Senderkommunikationsvorrichtung (110), die für die Kommunikation mit einer Empfängerkommunikationsvorrichtung (120) in einem drahtlosen Kommunikationsnetz (100) konfiguriert ist, wobei das Verfahren (1000) umfasst:
Bereitstellen grundlegender Synchronisationsinformationen durch Erzeugen eines Kommunikationsrahmens (115), umfassend mindestens ein erstes Signal und ein zweites Signal zum Synchronisieren der Empfängerkommunikationsvorrichtung (120); und
**gekennzeichnet dadurch,**
Bereitstellen zusätzlicher Synchronisationsinformationen auf der Basis des ersten und des zweiten Signals durch:
Anordnen mindestens des ersten Signals und des zweiten Signals in einer vordefinierten Konfiguration in dem Kommunikationsrahmen (115),
nämlich durch die Kombination von Positionen des ersten und des zweiten Signals innerhalb des Kommunikationsrahmens; und
Auswählen des ersten Signals und des zweiten Signals von einem Satz vordefinierter Synchronisationssignale, die sich in einem Erzeugungscode unterscheiden.

10. Empfängerkommunikationsvorrichtung (120), die konfiguriert ist für die Kommunikation mit einer Senderkommunikationsvorrichtung (110) in einem drahtlosen Kommunikationsnetz (100), die Empfängerkommunikationsvorrichtung (120) umfassend:
eine Kommunikationsschnittstelle (123), die konfiguriert ist, um einen Kommunikationsrahmen (115) von der Senderkommunikationsvorrichtung (110) zu empfangen, wobei der Kommunikationsrahmen (115) mindestens ein erstes Signal und ein zweites Signal, die grundlegende Synchronisationsinformationen zum Synchronisieren der Empfängerkommunikationsvorrichtung (120) bereitstellen, umfasst; und
**gekennzeichnet dadurch,**
einen Prozessor (121), der konfiguriert ist, um zusätzliche Synchronisationsinformationen von dem Kommunikationsrahmen (115) zu erhalten, wobei die zusätzlichen Synchronisationsinformationen definiert sind durch:
- eine Anordnung des ersten Signals und des zweiten Signals in einer vordefinierten Konfiguration in dem Kommunikationsrahmen (115),
nämlich durch die Kombination von Positionen des ersten und des zweiten Signals innerhalb des Kommunikationsrahmens; und
- eine Auswahl des ersten und des zweiten Signals von einem Satz vordefinierter Synchronisationssignale, die sich in einem Erzeugungscode unterscheiden.

11. Empfängerkommunikationsvorrichtung (120) nach Anspruch 10, wobei der Prozessor (121) konfiguriert ist, um die zusätzlichen Synchronisationsinformationen auf der Basis einer Kreuzkorrelation zu erhalten.

12. Empfängerkommunikationsvorrichtung (120) nach Anspruch 10 oder 11, wobei der Prozessor (121) konfiguriert ist, um die Empfängerkommunikationsvorrichtung (120) auf der Basis der zusätzlichen Synchronisationsinformationen, die von dem Kommunikationsrahmen (115) erhalten werden, hierarchisch zu synchronisieren.

13. Verfahren (1100) zum Betreiben einer Empfängerkommunikationsvorrichtung (120), die für die Kommunikation mit einer Senderkommunikationsvorrichtung (110) in einem drahtlosen Kommunikationsnetz (100) konfiguriert ist, das Verfahren (1100) umfassend:
Empfangen (1101) eines Kommunikationsrahmens (115) von der Senderkommunikationsvorrichtung (110), wobei der Kommunikationsrahmen (115) mindestens ein erstes Signal und ein zweites Signal, die grundlegende Synchronisationsinformationen zum Synchronisieren der Empfängerkommunikationsvorrichtung (120) bereitstellen, umfasst; und
**gekennzeichnet dadurch,**
Erhalten (1103) zusätzlicher Synchronisationsinformationen von dem Kommunikationsrahmen (115), wobei die zusätzlichen Synchronisationsinformationen definiert sind durch:
- eine Anordnung des ersten Signals und des zweiten Signals in einer vordefinierten Konfiguration in dem Kommunikationsrahmen (115),
nämlich durch die Kombination von Positionen des ersten und des zweiten Signals innerhalb des Kommunikationsrahmens; und
- eine Auswahl des ersten und des zweiten Signals von einem Satz vordefinierter Synchronisationssignale, die sich in einem Erzeugungscode unterscheiden.

14. Computerprogramm, umfassend Anweisungen, um die Vorrichtung nach Anspruch 1 zu veranlassen, die Schritte des Verfahrens (1000) nach Anspruch 9 auszuführen.

15. Computerprogramm, umfassend Anweisungen, um die Vorrichtung nach Anspruch 10 zu veranlassen, die Schritte des Verfahrens (1100) nach Anspruch 13 auszuführen.

## Revendications

1. Dispositif de communication émetteur (110) configuré pour
des communications avec un dispositif de communication récepteur (120) dans un réseau de communication sans fil (100), le dispositif de communication émetteur (110) comprenant :
un processeur (111) configuré pour fournir des informations de synchronisation de base en générant une trame de communication (115) comprenant au moins un premier signal et un second signal pour synchroniser le dispositif de communication récepteur (120)
et
**caractérisé en ce que**
le processeur (111) est en outre configuré pour fournir des informations de synchronisation supplémentaires sur la base du premier et du second signal par :
- l'agencement d'au moins le premier signal et le second signal dans une configuration prédéfinie dans la trame de communication (115),
à savoir par la combinaison des positions du premier et du second signal à l'intérieur de la trame de communication ; et
- la sélection du premier et du second signal à partir d'un ensemble de signaux de synchronisation prédéfinis qui diffèrent par un code de génération.

2. Dispositif de communication émetteur (110) selon la revendication 1,
à la fois le premier signal et le second signal étant configurés pour fournir individuellement au dispositif de communication récepteur (120) au moins des informations partielles pour déterminer un identifiant du dispositif de communication émetteur (110).

3. Dispositif de communication émetteur (110) selon la revendication 1 ou 2,
le premier signal et le second signal étant orthogonaux dans un ou plusieurs temps, fréquence, espace ou code.

4. Dispositif de communication émetteur (110) selon l'une quelconque des revendications précédentes,
le second signal étant le conjugué complexe du premier signal.

5. Dispositif de communication émetteur (110) selon l'une quelconque des revendications précédentes,
les premier et second signaux étant basés sur des séquences de Zadoff-Chu de même longueur L et d'indices racine u1 et u2 différents.

6. Dispositif de communication émetteur (110) selon la revendication 5,
le premier index racine u1 et le second index racine u2 étant des nombres premiers de longueur L avec u2 = L-u1.

7. Dispositif de communication émetteur (110) selon la revendication 6,
la longueur L étant égale à 63, le premier index racine u1 étant égal à 26 et le second index racine u2 étant égal à 37.

8. Dispositif de communication émetteur (110) selon l'une quelconque des revendications précédentes, les informations de synchronisation supplémentaires comprenant des informations pour synchroniser hiérarchiquement le dispositif de communication récepteur (120).

9. Procédé (1000) de fonctionnement d'un dispositif de communication émetteur (110) configuré pour communiquer avec un dispositif de communication récepteur (120) dans un réseau de communication sans fil (100), le procédé (1000) comprenant :
la fourniture d'informations de synchronisation de base en générant une trame de communication (115) comprenant au moins un premier signal et un second signal pour synchroniser le dispositif de communication récepteur (120) ; et
**caractérisé en ce que**
la fourniture des informations de synchronisation supplémentaires sur la base du premier et du second signal par :
l'agencement d'au moins le premier signal et le second signal dans une configuration prédéfinie dans la trame de communication (115),
à savoir par la combinaison des positions du premier et du second signal dans la trame de communication ; et
la sélection du premier signal et du second signal à partir d'un ensemble de signaux de synchronisation prédéfinis qui diffèrent par un code de génération.

10. Dispositif de communication récepteur (120) configuré pour
des communications avec un dispositif de communication émetteur (110) dans un réseau de communication sans fil (100), le dispositif de communication récepteur (120) comprenant :
une interface de communication (123) configurée pour recevoir une trame de communication (115) du dispositif de communication émetteur (110), la trame de communication (115) comprenant au moins un premier signal et un second signal fournissant des informations de synchronisation de base pour synchroniser le dispositif de communication récepteur (120) ; et
**caractérisé en ce que**
un processeur (121) configuré pour obtenir des informations de synchronisation supplémentaires à partir de la trame de communication (115), les informations de synchronisation supplémentaires étant définies par :
- un agencement du premier signal et du second signal dans une configuration prédéfinie dans la trame de communication (115),
à savoir par la combinaison des positions du premier et du second signal dans la trame de communication ; et
- une sélection du premier et du second signal à partir d'un ensemble de signaux de synchronisation prédéfinis qui diffèrent par un code générateur.

11. Dispositif de communication récepteur (120) selon la revendication 10, le processeur (121) étant configuré pour obtenir les informations de synchronisation supplémentaires sur la base d'une corrélation croisée.

12. Dispositif de communication récepteur (120) selon la revendication 10 ou 11, le processeur (121) étant configuré pour synchroniser hiérarchiquement le dispositif de communication récepteur (120) sur la base des informations de synchronisation supplémentaires obtenues à partir de la trame de communication (115).

13. Procédé (1100) de fonctionnement d'un dispositif de communication récepteur (120) configuré pour communiquer avec un dispositif de communication émetteur (110) dans un réseau de communication sans fil (100), le procédé (1100) comprenant :
la réception (1101) d'une trame de communication (115) du dispositif de communication émetteur (110), la trame de communication (115) comprenant au moins un premier signal et un second signal fournissant des informations de synchronisation de base pour synchroniser le dispositif de communication récepteur (120) ; et
**caractérisé en ce que**
l'obtention (1103) d'informations de synchronisation supplémentaires à partir de la trame de communication (115), les informations de synchronisation supplémentaires étant définies par :
- un agencement du premier signal et du second signal dans une configuration prédéfinie dans la trame de communication (115),
à savoir par la combinaison des positions du premier et du second signal dans la trame de communication ; et
- une sélection du premier et du second signal à partir d'un ensemble de signaux de synchronisation prédéfinis qui diffèrent par un code générateur.

14. Programme d'ordinateur comprenant des instructions pour amener le dispositif selon la revendication 1 à exécuter les étapes du procédé (1000) selon la revendication 9.

15. Programme informatique comprenant des instructions pour amener le dispositif selon la revendication 10 à exécuter les étapes du procédé (1100) selon la revendication 13.
